Europäisches Patentamt

European Patent Office

Office européen des brevets

(19)

(12)

Veröffentlichungsnummer: **0 275 036**

**A2**

EUROPÄISCHE PATENTANMELDUNG

(21) Anmeldenummer: 88100148.1

(22) Anmeldetag: 08.01.88

(51) Int. Cl.4 **C08G 63/60** , **C08G 63/20** , C08J 5/18

(30) Priorität: 14.01.87 DE 3700821

(43) Veröffentlichungstag der Anmeldung:
20.07.88 Patentblatt 88/29

(84) Benannte Vertragsstaaten:
BE DE FR GB NL

(71) Anmelder: BASF Aktiengesellschaft
Carl-Bosch-Strasse 38
D-6700 Ludwigshafen(DE)

(72) Erfinder: Kock, Hans-Jacob, Dr.
Benckiserstrasse 63
D-6700 Ludwigshafen(DE)
Erfinder: Hisgen, Bernd, Dr.
Goethestrasse 6
D-6703 Limburgerhof(DE)
Erfinder: Portugall, Michael, Dr.
Raiffeisenstrasse 7
D-6706 Wachenheim(DE)
Erfinder: Seiler, Erhard, Dr.
Erpolzheimer Strasse 1
D-6700 Ludwigshafen(DE)
Erfinder: Blinne, Gerd, Dr.
Im Woogtal 7
D-6719 Bobenheim(DE)

(54) Vollaromatische thermotrope Polyester.

(57) Vollaromatische thermotrope Polyester auf der Basis von
    A) 30 bis 60 mol% 4-Hydroxybenzoesäure
    B) 20 bis 35 mol% Terephthalsäure und
    C) 20 bis 35 mol% einer Mischung aus
        $C_1$) Trimethylhydrochinon und
        $C_2$ Resorcin, wobei das molare Verhältnis von $C_1$:$C_2$ im Bereich von 0,4:1 bis 0,7:1 und das molare Verhältnis von B:C im Bereich von 0,9:1 bis 1,1:1 liegt.

EP 0 275 036 A2

## Vollaromatische thermotrope Polyester

Die Erfindung betrifft vollaromatische thermotrope Polyester auf der Basis von

A) 30 bis 60 mol% 4-Hydroxybenzoesäure
B) 20 bis 35 mol% Terephthalsäure und
C) 20 bis 35 mol% einer Mischung aus

C₁) Trimethylhydrochinon und

C₂ Resorcin, wobei das molare Verhältnis von $C_1 : C_2$ im Bereich von 0,4:1 bis 0,7:1 und das molare Verhältnis von B:C im Bereich von 0,9:1 bis 1,1:1 liegt.

Die Summe der Komponenten A + B + C ergibt stets 100 mol%.

Weiterhin betrifft die Erfindung ein Verfahren zur Herstellung derartiger Polyester und deren Verwendung zur Herstellung von Fasern, Folien und Formkörpern.

Als "thermotrop" bezichnet man ganz allgemein Substanzen, die flüssig-kristalline Schmelzen bilden, d.h. Schmelzen mit anisotropen Eigenschaften.

Thermotrope aromatische Polyester aus aromatischen Dicarbonsäuren und Dihydroxyverbindungen sowie gegebenenfalls aromatischen Hydroxycarbonsäuren sind bekannt und z.B. in der GB-A-2 061 304, der DE-A-20 25 971, der EP-A-33 147 und der EP-A-92 843 beschrieben. Nachteilig nach diesen bekannten Systemen ist der Umstand, daß sie in einem komplizierten und zeitaufwendigen mehrstufigen Prozeß hergestellt werden müssen. Auch weisen die Produkte in der Regel Schmelzpunkte oberhalb von 350°C auf, was die thermoplastische Verarbeitung wesentlich erschwert.

In der DE-A-35 17 587 werden thermoplastische Formmassen beschrieben, die neben einem Grundharz eines Oxibenzoyl-Copolyesters eine kleinere Menge eines polymeren Fließmodifikates enthalten, der aus Terephthalsäure, Isophthalsäure, 4-Hydroxybenzoesäure, Hydrochinon und 4,4'-Dihydroxydiphenyl aufgebaut ist. Das eingesetzte 4,4'-Dihydroxydiphenyl ist relativ teuer und die in den Beispielen beschriebenen Fließverbesserer weisen zum Teil Schmelzpunkte von mehr als 400° C auf, d.h. diese Produkte sind nur schwer thermoplastisch verarbeitbar.

Aufgabe der vorliegenden Erfindung war es, vollaromatische thermotrope Polyester zur Verfügung zu stellen, die im Vergleich zu den in der DE-A-35 17 587 beschriebenen Fließmodifikatoren leichter thermoplastisch verarbeitet werden können, kostengünstiger herzustellen sind und verbesserte mechanische Eigenschaften aufweisen.

Diese Aufgabe wird erfindungsgemäß durch die eingangs definierten vollaromatischen thermotropen Polyester gelöst.

Die erfindungsgemäßen vollaromatischen Polyester bauen sich auf aus Einheiten die sich von 4-Hydroxybenzoesäure (A), Terephthalsäure (B). Trimethylhydrochinon (C₁) und Resorcin (C₂) ableiten.

Der Anteil von 4-Hydroxybenzoesäure (Komponente A) liegt im Bereich von 30 bis 60, insbesondere von 35 bis 55 mol%.

Der Anteil der Terephthalsäure (B) liegt im Bereich von 20 bis 35, insbesondere von 22.5 bis 32,5 mol%.

Entsprechendes gilt auch für den Anteil der Mischungen der Dihydroxyverbindungen (C₁ und C₂).

Das molare Verhältnis der Komponenten B:C liegt im Bereich von 0,9:1 bis 1,1:1, vorzugsweise von 0,95:1 bis 1,05:1 und besonders vorteilhaft werden etwa äquimolare Mengen der Komponenten B und C eingesetzt.

Das molare Verhältnis von Trimethylhydrochinon (C₁) zu Resorcin (C₂) liegt im Bereich von 0,4:1 bis 0,7:1, vorzugsweise von 0,45:1 bis 0.65:1.

Der thermotrope, d.h. flüssig-kristalline Zustand der erfindungsgemäßen vollaromatischen Polyester kann z.B. mit dem Polarisationsmikroskop nach einer in der DE-OS 25 20 819 beschriebenen Methode nachgewiesen werden. Zwischen gekreuzten Polarisatoren weisen die Polymerschmelzen, die in einer Schichtdicke von etwa 10 µm zwischen Glasplatten aufgetragen sind, Texturen auf, die einer mesomorphen Phase zugeordnet werden können.

Die relative Viskosität der erfindungsgemäßen vollaromatischen Polyester, bestimmt in 0,1 gew.%iger Lösung in Pentafluorophenol bei 60°C liegt vorzugsweise im Bereich von 1 bis 4, insbesondere von 1,5 bis 3,5 dl/g.

Die erfindungsgemäßen vollaromatischen thermotropen Polyester weisen gute mechanische Eigenschaften, insbesondere einen hohen Elastizitätsmodul, eine gute Reißfestigkeit und Reißdehnung sowie eine hohe Schlagzähigkeit auf.

Der Elastizitätsmodul, gemessen nach DIN 53 457 liegt im allgemeinen im Bereich von 8000 bis 20.000, insbesondere von 10.000 bis 18.000 $N/mm^2$, die Reißfestigkeit im Bereich von 60 bis 180, insbesondere 80 bis 150 $N/mm^2$ (gemessen nach DIN 53 455) und die Reißdehnung im Bereich von 0,5 % bis 5 %, vorzugsweise von 1 % bis 4 %.

Typische Werte für die Schlagzähigkeit, gemessen nach DIN 53 453 bei 23°C liegen im Bereich von 12 $kJ/m^2$ bis 40 $kJ/m^2$, insbesondere von 15 bis 30 $kJ/m^2$.

Die Glasübergangstemperatur liegt im allgemeinen im Bereich von 120 bis 180°C, insbesondere von 130 bis 170°C.

Die erfindungsgemäßen thermotropen Polyester lassen sich prinzipiell nach an sich bekannten Verfahren herstellen, wie sie z.B. in der US-A-4 375 530 und 4 118 372 beschrieben werden.

Vorteilhafterweise wird ein Verfahren angewandt, bei dem man die Ausgangsstoffe A, B, $C_1$ und $C_2$ in Gegenwart eines 5- bis 60 %igen molaren Überschusses, bezogen auf den Gesamtgehalt an OH-Gruppen eines Anhydrids einer Alkancarbonsäure mit 2 bis 6 C-Atomen einer einstufigen Polykondensation in der Schmelze unterwirft. Der molare Überschuß an Anhydrid bezieht sich dabei auf den Gesamtgehalt an OH-Gruppen in der Monomermischung.

Von den Anhydriden der Alkancarbonsäuren mit 2 bis 6 C-Atomen werden Essigsäureanhydrid, Propionsäureanhydrid und Buttersäureanhydrid, und ganz besonders Essigsäureanhydrid bevorzugt. Der molare Überschuß an Säureanhydrid beträgt vorzugsweise 10 bis 50 mol%.

Es hat sich auch als vorteilhaft herausgestellt, die Umsetzung unter Inertgasatmosphäre, z.B. Stickstoff oder Argon, durchzuführen.

Manchmal ist es vorteilhaft, durch Verwendung von Katalysatoren, z.B. solchen wie sie in der EP-A-131 846 beschrieben werden, die Umsetzung zu beschleunigen. In diesem Fall beträgt der Anteil dieser Katalysatoren im allgemeinen 0.001 bis 1 Gew.%, bezogen auf die Gesamtmenge der eingesetzten Monomeren.

Im folgenden wird eine besonders bevorzugte Ausführungsform dieses Verfahrens beschrieben.

Die Monomeren A, $B_1$, $C_1$ und $C_2$ und das Carbonsäureanhydrid werden unter Inertgasatmosphäre vermischt und unter Rühren bis zum Rückfluß erhitzt. Dabei ist es vorteilhaft, die Temperatur stufenweise zu steigern indem man zunächst bis zu 5 Stunden, vorzugsweise bis zu 2 Stunden bei einer Temperatur von 130 bis 200°C hält und anschließend die Temperatur vorzugsweise innerhalb eines Zeitraums von 2 bis 2,5 Stunden auf 250 bis 370°C erhöht. Dabei werden im Verlauf der Reaktion überschüssiges Carbonsäureanhydrid und gebildete Carbonsäuren abdestilliert.

Um eine möglichst quantitative Umsetzung zu erreichen, ist es vorteilhaft, in der letzten Phase der Reaktion bei verringertem Druck, vorzugsweise im Bereich von 0,1 bis 200 mbar (10 bis 20.000 Pa) zu arbeiten.

Die so erhaltenen vollaromatischen Polyester können anschließend einer Nachkondensation in fester Phase unterworfen werden. Diese wird vorzugsweise bei Temperaturen im Bereich von 200 bis 300°C, vorzugsweise von 200 bis 280°C, vorgenommen. Es ist auch möglich, die Nachkondensation in fester Phase nach einer thermoplastischen Verarbeitung vorzunehmen.

Vorteilhafterweise wird auch die Kondensation in fester Phase in Inertgasatmosphäre, z.B. unter Stickstoff oder Argon, durchgeführt.

Das vorstehend beschriebene Verfahren zeichnet sich dadurch aus, daß in einer Stufe in einer relativ kurzen Zeit vollaromatische Polyester mit vorteilhaften Eigenschaften erhalten werden.

Den erfindungsgemäßen vollaromatischen Polyestern können übliche Zusatzstoffe und Verarbeitungshilfsmittel zugesetzt werden. Hier seien nur Stabilisatoren gegen Oxidation, Wärme, UV-Licht, Gleit- und Entformungsmittel, Farbstoffe und Pigmente, faser- oder pulverförmige Füllstoffe und Verstärkungsmittel, Keimbildungsmittel, Nukleierungsmittel, oder Weichmacher genannt. Derartige Zusätze sind an sich bekannt und in der Literatur beschrieben.

Als Beispiele für Oxidationsverzögerer und Wärmestabilisatoren seien nur Halogenide von Metallen der Gruppe I des Periodensystems, gegebenenfalls in Abmischung mit Kupfer-I-halogeniden oder sterisch gehinderten Phenolen in Konzentrationen bis zu 1 Gew.% angeführt.

Als UV-Stabilisatoren sind substituierte Resorcine, Salicylate, Benzotriazole, Benzophenone sowie deren Mischungen geeignet, die im allgemeinen in Mengen bis zu 2 Gew.% zugesetzt werden.

Farbstoffe und Pigmente werden im allgemeinen in Mengen bis zu 5 Gew.% eingesetzt. Als Beispiele seien Nigrosin, Titandioxid, Cadmiumsulfid, Phthalocyaninfarbstoffe, Ultramarinblau oder Ruß genannt.

Füllstoffe und Verstärkungsmittel sind beispielsweise Kohlenstoffasern, Glasfasern, amorphe Kieselsäure, Calciumsilikat, Aluminiumsilikat, Magnesiumcarbonat, Kaolin, Kreide, gepulverter Quarz, Glimmer und Feldspat, die bis zu 70 Gew.%, bezogen auf das Gesamtgewicht der gefüllten Masse ausmachen können.

Als Keimbildungsmittel seien Talkum, Calciumfluorid, Natriumphenylphosphinat, Aluminiumoxid und feinteiliges Polytetrafluorethylen genannt.

Weiterhin können bis zu 20 Gew.% Weichmacher wie Phthalsäureester, Kohlenwasserstofföle und Sulfonamide eingesetzt werden.

Die erfindungsgemäßen vollaromatischen Polyester weisen eine glatte, glänzende und weitgehend abriebfeste Oberfläche bei heller Eigenfarbe auf. Außerdem sind sie weitgehend chemikalienbeständig, schwer entflammbar und besitzen eine für Polyester ausgezeichnete Hydrolysestabilität.

Aus den erfindungsgemäßen vollaromatischen Polyestern hergestellte Formkörper zeichnen sich durch hervorragende mechanische Eigenschaften, insbesondere Steifigkeit, Festigkeit und Zähigkeit aus. Die vollaromatischen Polyester eignen sich daher besonders zur Herstellung von Formkörpern für die Elektro- und Datentechnik, den Fahrzeugbau und andere technische Bereiche.

Daneben können aus den erfindungsgemäßen Polyestern Fasern und Folien mit einem guten Eigenschaftsspektrum hergestellt werden.

Die Verarbeitung der erfindungsgemäßen Polyester kann in der Regel bei Temperaturen von unterhalb 370°C durch Spritzguß, Pressen oder Extrusion erfolgen. Derartige Verfahren sind an sich bekannt und in der Literatur beschrieben.

Beispiel 1

Zur Herstellung eines erfindungsgemäßen Polyesters wurden folgende Komponenten eingesetzt:

3,9 mol (39,4 mol%) 4-Hydroxybenzoesäure
3 mol (30,3 mol%) Terephthalsäure
1,05 mol (10,6 mol%) Trimethylhydrochinon
1,95 mol (19,7 mol%) Resorcin.

Diese Komponenten wurden zusammen mit 1260 g Essigsäureanhydrid in einem 5 l-Reaktionskessel unter Stickstoff vorgelegt. Unter Rühren wurde innerhalb von 30 min auf 150°C, anschließend innerhalb von 150 min auf 350°C Außentemperatur erhitzt. Im Anschluß daran wurde der Druck auf 600 mbar und im weiteren Verlauf jeweils innerhalb von 10 min auf die Hälfte des vorherigen Wertes reduziert. Die Außentemperatur wurde dabei auf 360°C erhöht.

Der Enddruck betrug 100 mbar.

Die inhärente Viskosität des erhaltenen Polyesters betrug 3,3 dl/g, gemessen in 0,1 gew.%iger Lösung in Pentafluorphenol bei 60°C.

Der Polyester bildete eine fadenbildende mesomorphe Schmelze.

Aus DSC-Messungen (differential scanning calorimetry) ergab sich eine Glasübergangstemperatur Tg von 146°C.

Das Polymere ließ sich bei 360°C problemlos im Spritzguß verarbeiten.

Die Prüfung der mechanischen Eigenschaften erbrachte folgende Werte:

Elastizitätsmodul (nach DIN 53 457) 12072 N/mm²
Reißfestigkeit (nach DIN 53 455) 105 N/mm²
Reißdehnung (nach DIN 53 455) 1,99 %
Schlagzähigkeit (nach DIN 53 453 bei 23°C 22,6 kJ/m².

Ansprüche

1. Vollaromatische thermotrope Polyester auf der Basis von
A) 30 bis 60 mol% 4-Hydroxybenzoesäure
B) 20 bis 35 mol% Terephthalsäure und
C) 20 bis 35 mol% einer Mischung aus

$C_1$) Trimethylhydrochinon und
$C_2$ Resorcin.
wobei das molare Verhältnis von $C_1:C_2$ im Bereich von 0,4:1 bis 0,7:1 und das molare Verhältnis von B:C im Bereich von 0.9:1 bis 1,1:1 liegt.

2. Vollaromatische thermotrope Polyester nach Anspruch 1, erhältlich durch einstufige Polykondensation der Komponenten A, B, $C_1$ und $C_2$ in der Schmelze in Gegenwart eines 5 bis 60 %igen molaren Überschusses, bezogen auf den Gesamtgehalt an OH-Gruppen, von Anhydriden von Alkancarbonsäuren mit 2 bis 6 C-Atomen.

3. Verfahren zur Herstellung von vollaromatischen thermotropen Polyestern gemäß den Ansprüchen 1 und 2 durch einstufige Polykondensation in der Schmelze in Gegenwart von Anhydriden von Alkancarbonsäuren mit 2 bis 6 C-Atomen, dadurch gekennzeichnet, daß man

a) die Komponenten A, B, $C_1$ und $C_2$ in Gegenwart eines 5 bis 60 %igen molaren Überschusses, bezogen auf den Gesamtgehalt an OH-Gruppen, der Anhydride der Alkancarbonsäuren umsetzt und, gegebenenfalls,

b) die erhaltenen Produkte einer Nachkondensation in fester Phase unterwirft.

4. Verwendung der vollaromatischen thermotropen Polyester gemäß den Ansprüchen 1 bis 2, oder wie nach Anspruch 3 erhalten, zur Herstellung von Fasern, Folien und Formkörpern.

5. Dimensionsstabile Formkörper, enthaltend als wesentliche Komponente vollaromatische thermotrope Polyester gemäß den Ansprüchen 1 und 2 oder wie nach Anspruch 3 erhalten.